# EUROPEAN PATENT APPLICATION

(11) **EP 4 429 005 A1**
(43) Date of publication of application: **11.09.2024**
(21) Application number: 21963610.7
(22) Date of filing: 11.11.2021
(51) Int. Cl.: H01M 50/291

(54) **BATTERY, POWER-CONSUMING DEVICE, AND BATTERY MANUFACTURING DEVICE AND METHOD**

(71) Applicant: Contemporary Amperex Technology Co., Limited, Jiaocheng District Ningde Fujian 352100 (CN)
(72) Inventor: HUANG, Haihua, Ningde, Fujian 352100 (CN); LUO, Wenchao, Ningde, Fujian 352100 (CN)
(74) Representative: Gong, Jinping
(86) International application number: PCT/CN2021/130167
(87) International publication number: WO 2023/082158

(57) **Abstract**

A battery (100), an electric device, and a manufacturing device and method of battery are provided, and relate to the field of battery technologies. The battery (100) includes a box body (10) and a battery module (30). The box body (10) is provided with a first positioning portion (40). The battery module (30) is at least partially accommodated in the box body (10), and the battery module (30) is provided with a second positioning portion (50), where the second positioning portion (50) is configured to be plug-fitted to the first positioning portion (40) to position the battery module (30) in the box body (10). The first positioning portion (40) is disposed in the box body (10), and the second positioning portion (50) configured to be plug-fitted to the first positioning portion (40) is disposed on the battery module (30). In a process of putting the battery module (30) into the box body (10), the second positioning portion (50) is plug-fitted to the first positioning portion (40) to position the battery module (30) at a correct position in the box body (10), improving positioning accuracy of putting the battery module (30) into a box, and achieving the purpose of accurately putting the battery module (30) into the box body (10).

## Description

### TECHNICAL FIELD

This application relates to the field of battery technologies, and specifically, to a battery, an electric device, and a manufacturing device and method of battery.

### BACKGROUND

At present, a battery module is put into a box by manually adjusting the hole position and manually positioning the battery module in the box body. However, the manual positioning method is not only inefficient, but also has low positioning accuracy, resulting in low battery quality.

Therefore, how the positioning accuracy of putting battery modules into boxes is improved has become an urgent problem to be solved in the field of battery technologies.

### SUMMARY

Embodiments of this application provide a battery, an electric device, and a manufacturing device and method of battery, so as to solve the problem of low positioning accuracy of putting a battery module into a box.

According to a first aspect, an embodiment of this application provides a battery including a box body and a battery module; where the box body is provided with a first positioning portion; and the battery module is at least partially accommodated in the box body, and the battery module is provided with a second positioning portion, where the second positioning portion is configured to be plug-fitted to the first positioning portion to position the battery module in the box body.

In the foregoing technical solution, the box body is provided with the first positioning portion, and the battery module is provided with the second positioning portion configured to be plug-fitted to the second positioning portion. In a process of putting the battery module into the box body, the second positioning portion is plug-fitted to the first positioning portion so as to position the battery module at a correct position in the box body, improving positioning accuracy of putting the battery module into a box, and achieving the purpose of accurately putting the battery module into the box body.

In some embodiments of the first aspect of this application, one of the first positioning portion and the second positioning portion is a positioning groove and the other is a positioning protrusion; where a groove side wall of the positioning groove includes a first guide inclined surface, and the first guide inclined surface is configured to guide the positioning protrusion into the positioning groove along a depth direction of the positioning groove, so that a positioning fit is formed between the positioning protrusion and the positioning groove.

In the foregoing technical solution, the groove side wall of the positioning groove includes the first guide inclined surface, and the first guide inclined surface can guide the positioning protrusion on the battery module into the positioning groove along the depth direction of the positioning groove. Through the first guide inclined surface, the positioning protrusion can be guided into the positioning groove, so that the positioning protrusion can be accurately plug-fitted to the positioning groove in the process of putting the battery module into the box body. Moreover, the guiding function of the first guiding inclined surface can automatically correct the position of the battery module, achieving the purpose of accurately putting the battery module into the box. The groove side wall of the positioning groove includes the first guide inclined surface, so that the groove opening area of the positioning groove for insertion of the positioning protrusion is relatively large. This allows the positioning protrusion to align more easily with the groove opening of the positioning groove for insertion of the positioning protrusion, and facilitates insertion of the positioning protrusion into the positioning groove.

In some embodiments of the first aspect of this application, a peripheral wall of the positioning protrusion includes a second guide inclined surface, where the second guide inclined surface is configured to match the first guide inclined surface.

In the foregoing technical solution, the second guide inclined surface of the positioning protrusion matches the first guide inclined surface of the positioning groove. In the process of putting the battery module into the box, the second guide inclined surface of the positioning protrusion matches the first guide inclined surface of the positioning groove, so that the positioning protrusion accurately enters the positioning groove under the guidance of the first guide inclined surface and is plug-fitted to the positioning groove. Additionally, the position of the battery module is continuously corrected, allowing the battery module to be accurately put into the box body. After the positioning protrusion is plug-fitted to the positioning groove, the matching first guide inclined surface and second guide inclined surface can improve the stability of the battery module in the box body.

In some embodiments of the first aspect of this application, the groove side wall includes a plurality of first guide inclined surfaces located in different directions and connected sequentially in a circumferential direction.

In the foregoing technical solution, the groove side wall includes the plurality of first guide inclined surfaces located in different directions and connected sequentially in the circumferential direction, so that along the circumferential direction of the positioning groove, the groove side wall has a plurality of surfaces which can guide the positioning protrusion, reducing the matching difficulty between the positioning protrusion and the first guide inclined surface. The first guide inclined surface can also automatically correct the position of the battery module in the process of inserting the positioning protrusion into the positioning groove, so as to adjust the battery module to an accurate position in the box body, allowing the battery module to be accurately put into the box.

In some embodiments of the first aspect of this application, the first guide inclined surface is a plane.

In the foregoing technical solution, the first guide inclined surface is a plane, which not only can guide the positioning protrusion into the positioning groove, but also can automatically correct the position of the battery module in the process of inserting the positioning protrusion into the positioning groove, allowing the battery module to be accurately put into the box. The first guide inclined surface in plane form is less difficult to process and easier to manufacture.

In some embodiments of the first aspect of this application, the first guide inclined surface is part or all of a conical surface.

In the foregoing technical solution, the first guide inclined surface is part or all of a conical surface, so that along the circumferential direction of the positioning groove, any part of the groove side wall can guide the positioning protrusion, reducing the matching difficulty between the positioning protrusion and the first guide inclined surface. The first guide inclined surface can also automatically correct the position of the battery module in the process of inserting the positioning protrusion into the positioning groove, so as to adjust the battery module to an accurate position in the box body, allowing the battery module to be accurately put into the box.

In some embodiments of the first aspect of this application, the battery further includes two brackets spaced apart in a first direction, where the two brackets jointly support the battery module; and the first positioning portion is provided on the bracket.

In the foregoing technical solution, the two brackets jointly support the battery module, which can avoid direct contact between the battery module and the box body, and improve the shock resistance of the battery module. The first positioning portion is provided on the bracket, preventing direct provision of the first positioning portion on the box body from affecting structural strength of the box body. In addition, the battery module can be fixed in the box body through the brackets, and the battery module can be connected to the brackets through connectors such as bolts, thus reducing the number of threaded holes or other connecting structures arranged on the box body and ensuring the structural strength and sealing performance of the box body.

In some embodiments of the first aspect of this application, the battery module includes a plurality of battery cells and two end plates arranged at two ends of the plurality of battery cells along the first direction, where the end plate is provided with the second positioning portion, and the end plate is configured to be supported by the bracket.

In the foregoing technical solution, the battery module includes the plurality of battery cells and two end plates arranged at two ends of the battery cells along the first direction, where the two end plates can fix the plurality of battery cells into an integral structure. The second positioning portion is provided on the end plate, preventing the provision of the second positioning portion from affecting the structure of the battery cells. The end plate is configured to be supported by the bracket, which can avoid direct contact between the battery cells and the brackets, and reduce the risk of collision damage to the battery cells.

In some embodiments of the first aspect of the application, the battery cells are located between the two brackets.

In the foregoing technical solution, the battery cells being located between the two brackets can be understood as a space for accommodating battery cells being present between the two brackets, with the brackets arranged bypassing the battery cells. This avoids direct contact between the battery cells and the brackets and reduces the risk of collision damage to the battery cells.

In some embodiments of the first aspect of this application, the first positioning portion is a positioning groove, and the second positioning portion is a positioning protrusion; where the positioning groove runs through a side of the bracket facing the end plate and a side of the bracket facing the other bracket of the two brackets.

In the foregoing technical solution, the positioning groove runs through the side of the bracket facing the end plate, so that a groove opening is formed on the side of the positioning groove facing the end plate, facilitating insertion of the positioning protrusion into the positioning groove. The positioning groove runs through the side of the bracket facing the other bracket of the two brackets, so that a groove opening can be formed on the side of the bracket facing the other bracket of the two brackets, reducing the risk of the battery cell colliding with the bracket in the process of putting the battery module into the box body. In addition, two groove openings are formed on the positioning groove, which can reduce the weight of the brackets, thus reducing the weight of the battery.

In some embodiments of the first aspect of this application, a gap is present between an end of the battery cell provided with the end plate and the bracket.

In the foregoing technical solution, a gap is present between the end of the battery cell provided with the end plate and the bracket, reducing the risk of the battery cell colliding with the bracket.

In some embodiments of the first aspect of this application, one of the first positioning portion and the second positioning portion is a positioning groove and the other is a positioning protrusion; where a gap is present between a bottom surface of the positioning groove and an end surface of the positioning protrusion facing the bottom surface of the positioning groove.

In the foregoing technical solution, a gap is present between the bottom surface of the positioning groove and the end surface of the positioning protrusion facing the bottom surface of the positioning groove, so that when the battery is subject to collision, the collision force is not transmitted to the positioning protrusion, preventing the positioning protrusion from being broken by the collision and affecting stability of the battery module in the box body.

In some embodiments of the first aspect of this application, the bracket is provided with a plurality of first positioning portions, and the plurality of first positioning portions are spaced apart along a second direction; where the second direction is perpendicular to the second direction.

In the foregoing technical solution, the plurality of first positioning portions are spaced apart on the bracket along the second direction, so that a plurality of second positioning portions can be correspondingly arranged on the battery module along the second direction, allowing the battery module to be plug-fitted to a plurality of positions in the box body, thus ensuring the positioning accuracy and positioning stability of the battery module in the box body.

According to a second aspect, an embodiment of this application provides an electric device including the battery according to any one of the embodiments of the first aspect.

According to a third aspect, an embodiment of this application provides a manufacturing device of battery including a providing apparatus and an assembling apparatus. The providing apparatus is configured to provide a battery module and a box body, where the box body is provided with a first positioning portion; and the battery module is at least partially accommodated in the box body, and the battery module is provided with a second positioning portion. The assembling apparatus is configured to plug-fit the second positioning portion to the first positioning portion to position the battery module in the box body.

In the foregoing technical solution, the box body provided by the providing apparatus is provided with the first positioning portion, and the battery module is provided with the second positioning portion. The assembling apparatus plug-fits the second positioning portion to the first positioning portion so as to position the battery module at a correct position in the box body, improving positioning accuracy of putting the battery module into a box, and achieving the purpose of accurately putting the battery module into the box body.

According to a fourth aspect, an embodiment of this application provides a manufacturing method of battery, including:
providing a battery module and a box body, where
the box body is provided with a first positioning portion; and
the battery module is at least partially accommodated in the box body, and the battery module is provided with a second positioning portion; and
plug-fitting the second positioning portion to the first positioning portion to position the battery module in the box body.

In the foregoing technical solution, the box body is provided with the first positioning portion, and the battery module is provided with the second positioning portion. The second positioning portion is plug-fitted to the first positioning portion so as to position the battery module at a correct position in the box body, improving positioning accuracy of putting the battery module into a box, and achieving the purpose of accurately putting the battery module into the box body.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is an exploded view of a battery cell according to some other embodiments of this application;
FIG. 5 is a cross-sectional view of a battery according to some embodiments of this application;
FIG. 6 is an enlarged view of position I in FIG. 5;
FIG. 7 is an exploded view of a battery according to still some other embodiments of this application;
FIG. 8 is a cross-sectional view of a battery according to yet some other embodiments of this application;
FIG. 9 is an enlarged view of position II in FIG. 8;
FIG. 10 is a locally enlarged cross-sectional view of a battery according to still some other embodiments of this application;
FIG. 11 is a schematic structural diagram of a plurality of first positioning portions arranged on a bracket according to some embodiments of this application;
FIG. 12 is a schematic structural diagram of a manufacturing device of battery according to an embodiment of this application; and
FIG. 13 is a flowchart of a manufacturing method of battery according to an embodiment of this application.

Reference signs: 1000. vehicle; 100. battery; 10 box body; 11. opening end; 12. accommodating cavity; 20. box cover; 30. battery module; 31. battery cell; 311. housing; 3111. opening; 312. electrode assembly; 3121. positive electrode tab; 3122. negative electrode tab; 313. end cover assembly; 3131. end cover; 3132. electrode terminal; 32. end plate; 321. second mounting hole; 40. first positioning portion; 41. first guide inclined surface; 42. first positioning portion a; 43. first positioning portion b; 44. first positioning portion c; 45. first positioning portion d; 50. second positioning portion; 51. second guide inclined surface; 60. bracket; 61. first mounting hole; 200. controller; 300. motor; 2000. manufacturing device of battery; 2100. providing apparatus; 2200. assembling apparatus; X. first direction; Y second direction; and Z. third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. Generally, the components of the embodiments of this application as described and illustrated in the accompanying drawings herein can be arranged and designed in a variety of configurations.

Therefore, the following detailed description of the embodiments of this application as provided in the accompanying drawings is not intended to limit the scope of this application but merely to represent selected embodiments of this application. All other embodiments obtained by persons of ordinary skill in the art based on the embodiments of this application without creative efforts shall fall within the protection scope of this application.

It should be noted that, without conflict, the embodiments and features in the embodiments in this application may be combined with each other.

It should be noted that similar reference numerals and letters indicate similar items in the following drawings, and therefore once an item is defined in one drawing, it does not need to be further defined or explained in the subsequent drawings.

In the description of the embodiments of this application, it should be noted that the orientations or positional relationships as indicated are orientations or positional relationships based on the accompanying drawings, or conventional orientations or positional relationships of products of this application, or orientations or positional relationships as conventionally understood by persons skilled in the art, and the orientations or positional relationships as indicated are merely for ease and brevity of description of this application rather than indicating or implying that the apparatuses or elements mentioned must have specific orientations or must be constructed or manipulated according to specific orientations, and therefore cannot be understood as limitations on this application. In addition, the terms "first", "second", "third", and the like are merely intended for distinguishing purposes and shall not be understood as any indication or implication of relative importance.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

A battery includes a box body and a battery module, and a battery module includes a plurality of battery cells connected in series, parallel, or series-parallel. A box body is configured to accommodate part of the battery cells. During battery assembling, the battery module is put into the box body from the opening end of the box body so that the battery module is accommodated in the box body; and the box cover is disposed at the opening end of the box body, thereby forming a battery.

The inventors of this application have noticed that in order to position the battery module in the correct position in the box body, typically the hole positions are adjusted manually in the process of putting the battery module into the box body, but the efficiency of manually adjusting the hole positions is low, which reduces the production efficiency.

To alleviate the problem of low efficiency of putting a battery module into a box by manually adjusting hole positions, the applicant has found through research that the battery module can be automatically put into the box through CCD (Charge-coupled Device) detection, but this method has the problem of insufficient reference accuracy. Moreover, the inventors have found that no positioning structure is provided between the box body and the battery module, no matter whether the battery module is put into the box through manual adjustment of hole positions or automatically through CCD detection.

In view of this, to solve the problems of low efficiency and insufficient reference accuracy of putting battery modules into boxes, the inventors have designed a battery after in-depth research. A first positioning portion is provided in a box body, and a second positioning portion configured to be plug-fitted to the first positioning portion is provided on a battery module. In a process of putting the battery module into the box body, the second positioning portion is plug-fitted to the first positioning portion to position the battery module at a correct position in the box body, improving positioning accuracy of putting the battery module into a box, and achieving the purpose of accurately putting the battery module into the box body.

The battery disclosed in the embodiments of this application may be used without limitation in electric devices such as vehicles, ships, or aircrafts. The battery disclosed in this application may be used to constitute a power supply system of the electric apparatus. Such battery can achieve a relatively high positioning accuracy in the assembly process, helping to improve the stability of the battery module in the box body and the performance stability of the battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the electric device.

For ease of description, the electric device being a vehicle is used as example for description of the following embodiments.

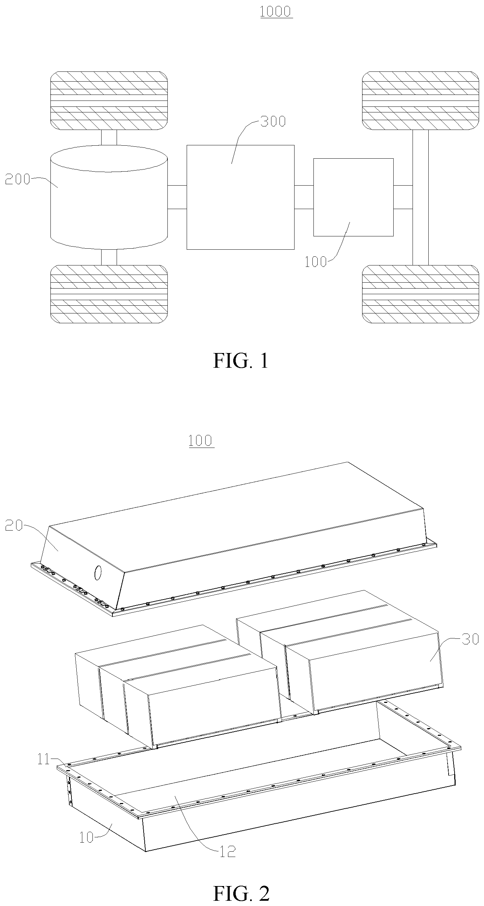

Referring to FIG. 1, FIG. 1 is a schematic structural diagram of a vehicle 1000 according to some embodiments of this application. The vehicle 1000 is provided with a battery 100 inside, where the battery 100 may be provided at the bottom or head or tail of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application. The battery 100 includes a box body 10, a box cover 20, and a battery module 30. The box body 10 is configured to accommodate part of the battery module 30, and the box body 10 and the box cover 20 jointly define an accommodating space for accommodating the battery module 30.

The box body 10 has an opening end 11, so the box body 10 is a hollow structure with one open end and an accommodating cavity 12 for accommodating the battery module 30. The battery module 30 is partially or entirely accommodated in the accommodating cavity 12 of the box body 10, and the battery module 30 is put into the box body 10 from the opening end 11 of the box body 10. In an embodiment where the battery module 30 is partially accommodated in the box body 10, the battery module 30 protrudes from the opening end 11 of the box body 10. In an embodiment where the battery module 30 is entirely accommodated in the box body 10, the battery module 30 is flush with the opening end 11 of the box body 10 or located below the opening end 11 of the box body 10.

A cross-sectional shape of the box body 10 may be rectangular, square, circular, polygonal, or the like. In a height direction, the cross-sectional area of the accommodating cavity 12 formed by the box body 10 may be equal or may change gradually. For example, the cross-sectional area of the accommodating cavity 12 near the box cover 20 of the box body 10 is the largest, and the cross-sectional area of the accommodating cavity 12 gradually decreases along an extension direction leaving the box cover 20. Such structure of the box body 10 facilitates the operation of putting the battery module 30 into the box and the arrangement of other parts.

The box cover 20 is configured to cover the opening end 11 of the box body 10 to define an accommodating space with a certain volume for accommodating the battery module 30. The box body 10 and the box cover 20 are sealed using a sealing member (not shown in the figure), and can be fixedly connected at the edge of the box body 10 using bolts or other fixing means, so as to define a closed accommodating space for accommodating the battery module 30.

The box body 10 and the box cover 20 may be of various shapes, such as a cuboid or a cylinder. The box cover 20 may also be a hollow structure with one open end and an accommodating cavity for accommodating the battery module 30. The opening side of the box cover 20 covers the opening end 11 of the box body 10 so as to form an accommodating space for accommodating the battery module 30. A sealing member is disposed between the box body 10 and the box cover 20 so as to form a closed space for accommodating the battery module 30. Certainly, the box body 10 may be a hollow structure with one open end and an accommodating cavity 12 for accommodating the battery module 30, and the box cover 20 may be a plate-like structure. The box cover 20 covers the opening end 11 of the box body 10 so as to form an accommodating space for accommodating the battery module 30. A sealing member is disposed between the box body 10 and the box cover 20 so as to form a closed space for accommodating the battery module 30.

The battery module 30 includes a plurality of battery cells 31, and the plurality of battery cells 31 may be connected in series, parallel, or series-parallel, where being connected in series-parallel means a combination of series and parallel connections of the plurality of battery cells 31. The plurality of battery cells 31 may be directly connected in series, parallel, or series-parallel, so that the battery module 30 constituted by the plurality of battery cells 31 is accommodated in the box body 10 as a whole. Certainly, the plurality of battery cells 31 may first be connected in series, parallel, or series-parallel to constitute the battery module 30. In the battery 100, there may be one or more battery modules 30. In the battery 100 with a plurality of battery modules 30, the plurality of battery modules 30 are connected in series, parallel, or series-parallel to constitute a whole, and accommodated in the accommodating space defined by the box body 10 and the box cover 20. The battery cell 31 may be cylindrical, flat, cuboid, or of other shapes. FIG. 2 shows the battery cell 31 being cuboid as an example.

In some embodiments, the battery 100 may further include a busbar (not shown in the figures). The plurality of battery cells 31 may be electrically connected via the busbar, so that the plurality of battery cells 31 are connected in series, parallel, or series-parallel.

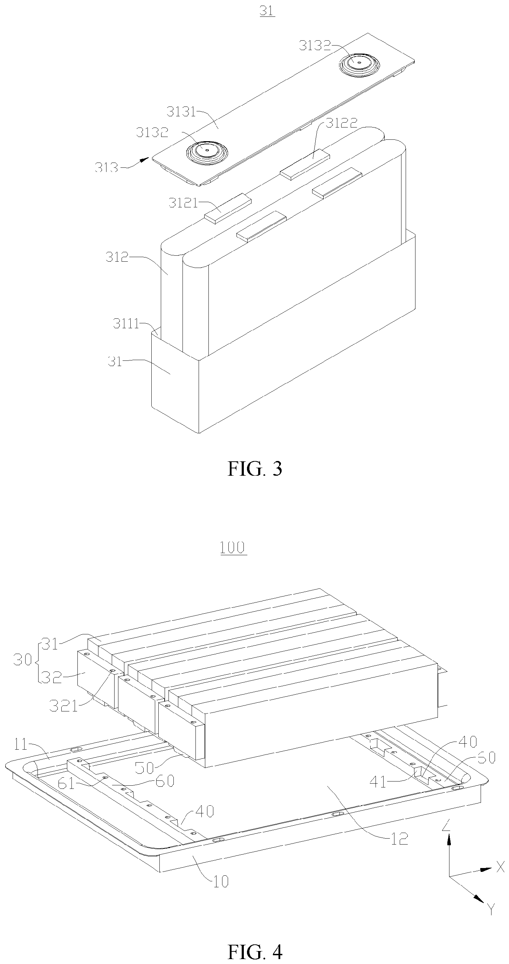

Referring to FIG. 3, FIG. 3 is an exploded view of a battery cell 31 according to some embodiments of this application. The battery cell 31 may include a housing 311, an electrode assembly 312, and an end cover assembly 313. The housing 311 has an opening 3111, the electrode assembly 312 is accommodated in the housing 311, and the end cover assembly 313 is configured to cover the opening 3111.

The electrode assembly 312 may include a positive electrode plate (not shown in the figure), a negative electrode plate (not shown in the figure), and a separator (not shown in the figure). The electrode assembly 312 may be a wound structure formed by the positive electrode plate, the separator, and the negative electrode plate through winding, or a laminated structure formed by the positive electrode plate, the separator, and the negative electrode plate through lamination. The electrode assembly 312 further includes a positive electrode tab 3121 and a negative electrode tab 3122. The positive electrode tab 3121 may be a positive electrode current collector uncoated with a positive electrode active substance layer in the positive electrode plate, and the negative electrode tab 3122 may be a negative electrode current collector uncoated with a negative electrode active substance layer in the negative electrode plate.

The end cover assembly 313 includes an end cover 3131 and an electrode terminal 3132 disposed on the end cover 3131. The housing 311 may have one or two openings 3111. If there is one opening 3111 in the housing 311, one end cover assembly 313 may be provided, and the end cover assembly 313 may be provided with two electrode terminals 3132, where the two electrode terminals 3132 are configured to be electrically connected to the positive electrode tab 3121 and the negative electrode tab 3122 of the electrode assembly 312 respectively, and the two electrode terminals 3132 in the end cover assembly 313 are a positive electrode terminal and a negative electrode terminal respectively. If there are two openings 3111 in the housing 311, for example, two openings 3111 are arranged on two opposite sides of the housing 311, two end cover assemblies 313 may be provided, and the two end cover assemblies 313 cover the two openings 3111 of the housing 311 respectively. In this case, the electrode terminal 3132 in one end cover assembly 313 may be a positive electrode terminal configured to be electrically connected to the positive electrode tab 3121 of the electrode assembly 312; and the electrode terminal 3132 in the other end cover assembly 313 is a negative electrode terminal configured to be electrically connected to the negative electrode plate of the electrode assembly 312. As shown in FIG. 3, the housing 311 of the battery cell 31 has one opening 3111, and the end cover 3131 is provided with two electrode terminals 3132.

Referring to FIG. 4, FIG. 4 is an exploded view of a battery 100 according to some other embodiments of this application. The battery 100 includes a box body 10 and a battery module 30. The box body 10 is provided with a first positioning portion 40. The battery module 30 is at least partially accommodated in the box body 10. The battery module 30 is provided with a second positioning portion 50. The second positioning portion 50 is configured to be plug-fitted to the first positioning portion 40 to position the battery module 30 in the box body 10.

The first positioning portion 40 is disposed in the box body 10, and specifically on a bottom wall of the box body 10. The bottom wall of the box body 10 is arranged opposite the battery module 30 along a direction in which the battery module 30 is put into the box body 10, and the first positioning portion 40 is arranged opposite the opening end 11 of the box body 10 along a direction in which the battery module 30 is put into the box body 10 from the opening end 11 of the box body 10.

One or a plurality of first positioning portions 40 may be provided. One or a plurality of second positioning portions 50 may be provided. "A plurality of" means two or more. In some embodiments, the number of first positioning portions 40 may be the same as the number of second positioning portions 50, and the first positioning portions 40 and the second positioning portions 50 may be arranged in one-to-one correspondence, that is, one second positioning portion 50 is corresponding disposed for each first positioning portion 40 and plug-fitted to it. In some other embodiments, the number of first positioning portions 40 may be different from the number of second positioning portions 50.

The first positioning portion 40 is provided in the box body 10, and the second positioning portion 50 configured to be plug-fitted to the second positioning portion 50 is provided on the battery module 30. In the process of putting the battery module 30 into the box body 10, the second positioning portion 50 is plug-fitted to the first positioning portion 40 to position the battery module 30 at a correct position in the box body 10, improving positioning accuracy of putting the battery module 30 into the box, and achieving the purpose of accurately putting the battery module 30 into the box body 10.

To implement a plug fit between the first positioning portion 40 and the second positioning portion 50, in some embodiments, one of the first positioning portion 40 and the second positioning portion 50 is a positioning groove and the other is a positioning protrusion. A groove side wall of the positioning groove includes a first guide inclined surface 41, and the first guide inclined surface 41 is configured to guide the positioning protrusion into the positioning groove along a depth direction of the positioning groove, so that a positioning fit is formed between the positioning protrusion and the positioning groove.

If the first positioning portion 40 is a positioning groove, the second positioning portion 50 is a positioning protrusion. If the first positioning portion 40 is a positioning protrusion, the second positioning portion 50 is a positioning groove. In FIG. 4, the first positioning portion 40 is a positioning groove, and the second positioning portion 50 is a positioning protrusion. The depth direction of the positioning groove is consistent with the direction in which the battery module 30 is put into the box body 10.

The first guide inclined surface 41 is arranged at an angle with the direction in which the battery module 30 is put into the box body 10 to form a tilted first guide inclined surface 41.

The groove side wall of the positioning groove refers to a groove wall arranged around the edge of the bottom surface of the positioning groove. When the positioning protrusion is plug-fitted to the positioning groove, the groove side wall of the positioning groove is located at the periphery of the positioning protrusion and matches the shape of the positioning protrusion. Through the cooperation between the groove side wall and the periphery of the protrusion, position limiting can be implemented in all directions except the insertion direction, thus implementing simple and accurate positioning of the battery module 30. The first guide inclined surface 41 may be all or part of the groove side wall of the positioning groove.

In an embodiment where the first positioning portion 40 is a positioning groove and the second positioning portion 50 is a positioning protrusion, the cross-sectional area of the positioning groove gradually decreases along the direction in which the battery module 30 is put into the box body 10, and a groove opening with a relatively large cross-sectional area is formed in the positioning groove for insertion of the positioning protrusion, allowing the positioning protrusion to be inserted into and plug-fitted to the positioning groove. Along the direction in which the battery module 30 is put into the box body 10, the cross-sectional area of the positioning protrusion may gradually decrease or may be the same.

In an embodiment where the first positioning portion 40 is a positioning protrusion and the second positioning portion 50 is a positioning groove, the cross-sectional area of the positioning groove gradually increases along the direction in which the battery module 30 is put into the box body 10, and a groove opening with a relatively large cross-sectional area is formed in the positioning groove for insertion of the positioning protrusion, allowing the positioning protrusion to be inserted into and plug-fitted to the positioning groove. Along the direction in which the battery module 30 is put into the box body 10, the cross-sectional area of the positioning protrusion may gradually increase or may be the same.

In other embodiments, the groove side wall of the positioning groove may be part or all of a plane or cylindrical surface parallel to the direction in which the battery module 30 is put into the box body 10.

The groove side wall of the positioning groove includes the first guide inclined surface 41, and the first guide inclined surface 41 can guide the positioning protrusion on the battery module 30 into the positioning groove along the depth direction of the positioning groove. Through the first guide inclined surface 41, the positioning protrusion can be guided into the positioning groove, so that the positioning protrusion can be accurately plug-fitted to the positioning groove in the process of putting the battery module 30 into the box body 10. Moreover, the guiding function of the first guiding inclined surface 41 can automatically correct the position of the battery module 30, achieving the purpose of accurately putting the battery module 30 into the box. The groove side wall of the positioning groove includes the first guide inclined surface 41, so that the groove opening area of the positioning groove for insertion of the positioning protrusion is relatively large. This allows the positioning protrusion to align more easily with the groove opening of the positioning groove for insertion of the positioning protrusion, and facilitates insertion of the positioning protrusion into the positioning groove.

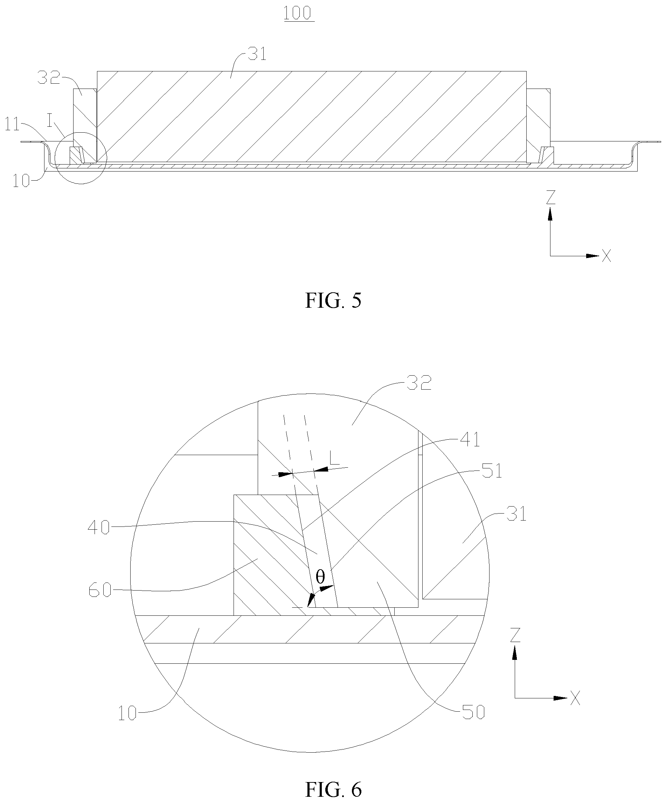

Referring to FIG. 5 and FIG. 6, FIG. 5 is a cross-sectional view of a battery 100 according to some embodiments of this application, and FIG. 6 is an enlarged view of position I in FIG. 5. In some embodiments, a peripheral wall of the positioning protrusion includes a second guide inclined surface 51, and the second guide inclined surface 51 is configured to match the first guide inclined surface 41.

The second guide inclined surface 51 is arranged at an angle with the direction in which the battery module 30 is put into the box body 10 to form a tilted second guide inclined surface 51.

The peripheral wall of the positioning protrusion refers to a wall of the positioning protrusion arranged opposite the groove side wall when the positioning protrusion is inserted into the positioning groove. The second guide inclined surface 51 may be all or part of the peripheral wall of the positioning protrusion.

In an embodiment where the first positioning portion 40 is a positioning groove and the second positioning portion 50 is a positioning protrusion, the cross-sectional area of the positioning protrusion gradually decreases along the direction in which the battery module 30 is put into the box body 10, and an end surface with a relatively small cross-sectional area is formed on the positioning protrusion, allowing the positioning protrusion to be inserted and plug-fitted to the positioning groove. In an embodiment where the first positioning portion 40 is a positioning protrusion and the second positioning portion 50 is a positioning groove, the cross-sectional area of the positioning protrusion gradually increases along the direction in which the battery module 30 is put into the box body 10, and an end surface with a relatively small cross-sectional area is formed on the positioning protrusion, allowing the positioning protrusion to be inserted and plug-fitted to the positioning groove.

The second guide inclined surface 51 may be an inclined surface or a conical surface. In other embodiments, the peripheral wall of the positioning protrusion may be a surface parallel to the direction in which the battery module 30 is put into the box body 10.

"The first guide inclined surface 41 being configured to match the second guide inclined surface 51" means that when the positioning protrusion is plug-fitted to the positioning groove, the second guide inclined surface 51 is attached to the first guide inclined surface 41, or the first guide inclined surface 41 and the second guide inclined surface 51 are substantially parallel. In an embodiment where the first guide inclined surface 41 and the second guide inclined surface 51 are substantially parallel, there may be a gap between the first guide inclined surface 41 and the second guide inclined surface 51. The gap between the first guide inclined surface 41 and the second guide inclined surface 51 is L, where L ≥ 0 mm. An included angle between the second guide inclined surface 51 and an end surface with the smallest cross-sectional area of the positioning protrusion is θ, where θ ≥ 60°.

The second guide inclined surface 51 of the positioning protrusion matches the first guide inclined surface 41 of the positioning groove. In the process of putting the battery module 30 into the box, the second guide inclined surface 51 of the positioning protrusion matches the first guide inclined surface 41 of the positioning groove, so that the positioning protrusion accurately enters the positioning groove under the guidance of the first guide inclined surface 41 and is plug-fitted to the positioning groove. Additionally, the position of the battery module 30 is continuously corrected, allowing the battery module 30 to be accurately put into the box body 10. After the positioning protrusion is plug-fitted to the positioning groove, the matching first guide inclined surface 41 and second guide inclined surface 51 can improve the stability of the battery module 30 in the box body 10.

The positioning groove may be of various structural forms. The positioning grooves with different structural forms have different forms of groove side walls, corresponding to different forms and quantities of the first guide inclined surfaces 41. For example, referring to FIG. 4, in some embodiments, the groove side wall includes a plurality of first guide inclined surfaces 41 located in different directions and connected sequentially in a circumferential direction.

The first guide inclined surfaces 41 may be inclined planes, and along the circumferential direction of the positioning groove, two adjacent first guide inclined surfaces 41 are connected to form an edge. Any one of the first guide inclined surfaces 41 can guide the positioning protrusion. The peripheral wall of the positioning protrusion may include a plurality of second guide inclined surfaces 51 located in different directions and connected sequentially in the circumferential direction, and the second guide inclined surfaces 51 may be inclined planes. The peripheral wall of the positioning protrusion matches the groove side wall of the positioning groove. The number of the first guide inclined surfaces 41 and the number of the second guide inclined surfaces 51 may be the same, and the first guide inclined surfaces 41 and the second guide inclined surfaces 51 are arranged in one-to-one correspondence, the second guide inclined surface 51 being configured to match a corresponding first guide inclined surfaces 41. In other embodiments, the first guide inclined surface 41 and the second guide inclined surface 51 may be different, for example, the first guide inclined surface 41 is an inclined surface and the second guide inclined surface 51 may be a conical surface. The inclination degree of the first guide inclined surface 41 is substantially the same as that of the second guide inclined surface 51.

The groove side wall includes a plurality of first guide inclined surfaces 41 located in different directions and connected sequentially in the circumferential direction, so that along the circumferential direction of the positioning groove, the groove side wall has a plurality of surfaces which can guide the positioning protrusion, reducing the matching difficulty between the positioning protrusion and the first guide inclined surface 41. The first guide inclined surface 41 can also automatically correct the position of the battery module 30 in the process of inserting the positioning protrusion into the positioning groove, so as to adjust the battery module 30 to an accurate position in the box body 10, allowing the battery module 30 to be accurately put into the box.

Still referring to FIGs. 4, 5, and 6, in some embodiments, the first guide inclined surface 41 is a plane.

Specifically, the first guide inclined surface 41 is an inclined plane. The first guide inclined surface 41 is a plane, which not only can guide the positioning protrusion into the positioning groove, but also can automatically correct the position of the battery module 30 in the process of inserting the positioning protrusion into the positioning groove, allowing the battery module 30 to be accurately put into the box. The first guide inclined surface 41 in plane form is less difficult to process and easier to manufacture.

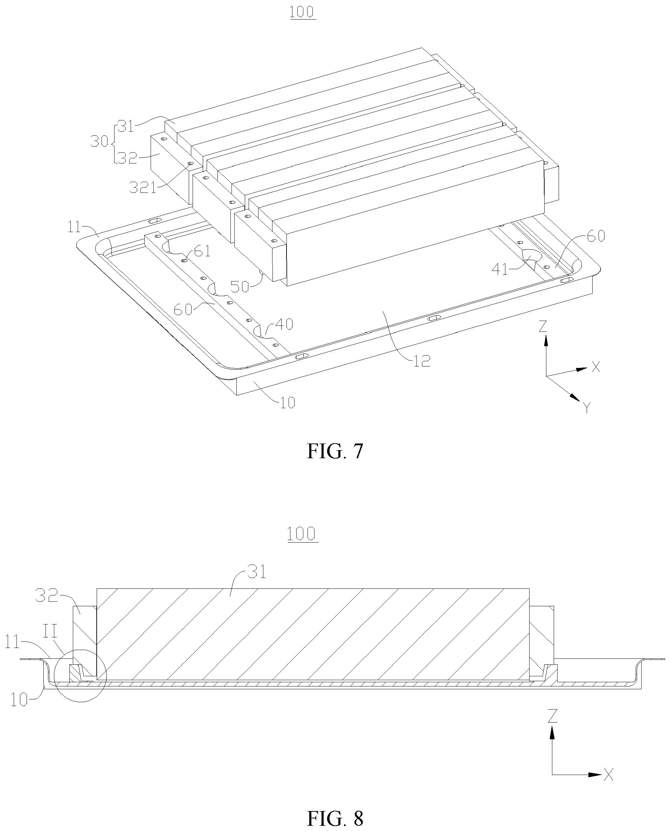

Certainly, the first guide inclined surface 41 may alternatively be of other forms. For example, referring to FIG. 7, in some embodiments, the first guide inclined surface 41 is part or all of a conical surface.

In some embodiments, as shown in FIG. 7, along the circumferential direction of the positioning groove, the groove side wall of the positioning groove is a non-closed structure, and the groove side wall of the positioning groove is part of a conical surface, so that the first guide inclined surface 41 is part of a conical surface. In some embodiments, along the circumferential direction of the positioning groove, the groove side wall of the positioning groove is a closed structure, and the groove side wall of the positioning groove is a conical surface, so that the first guide inclined surface 41 can be all of a conical surface.

In an embodiment where the groove side wall of the positioning groove includes a plurality of first guide inclined surfaces 41, the structural forms of the first guide inclined surfaces 41 may be the same, for example, all the first guide inclined surfaces 41 are inclined planes; or the structural forms of the first guide inclined surfaces 41 may be different, for example, some of the first guide inclined surfaces 41 are inclined surfaces, and some are part of conical surfaces.

The first guide inclined surface 41 is part or all of a conical surface, so that along the circumferential direction of the positioning groove, any part of the groove side wall can guide the positioning protrusion, reducing the matching difficulty between the positioning protrusion and the first guide inclined surface 41. The first guide inclined surface 41 can also automatically correct the position of the battery module 30 in the process of inserting the positioning protrusion into the positioning groove, so as to adjust the battery module 30 to an accurate position in the box body 10, allowing the battery module 30 to be accurately put into the box.

Still referring to FIG. 7, in some embodiments, the battery 100 further includes two brackets 60 spaced apart in a first direction X, where the two brackets 60 jointly support the battery module 30, and the first positioning portion 40 is provided on the bracket 60.

The two brackets 60 are mounted in the box body 10 and connected to the bottom wall of the box body 10. The brackets 60 may be connected to the bottom wall of the box body 10 by welding, bolting, or the like. As shown in FIG. 7, the bracket 60 is provided with a first mounting hole 61. The first mounting hole 61 allows a bolt or the like to run through to mount the bracket 60 to the box body 10 or connect the battery module 30 to the bracket 60. The first mounting hole 61 is provided in plurality, and the plurality of first mounting holes 61 are spaced apart on the bracket. In other embodiments, the bracket 60 may alternatively be connected to a side wall of the box body 10. The side wall of the box body 10 surrounds the periphery of the battery module 30, and along the direction in which the battery module 30 is put into the box body 10, the bottom wall of the box body 10 is arranged opposite the battery module 30.

Along the first direction X, two ends of the battery module 30 are respectively supported by the two brackets 60. A gap is present between a side of the battery module 30 facing the bottom wall of the box body 10 and the bottom wall of the box body 10. In other words, the two brackets 60 have the battery module 30 suspending in the box body 10, avoiding direct contact between the battery module 30 and the box body 10.

The two brackets 60 jointly support the battery module 30, which can avoid direct contact between the battery module 30 and the box body 10, and improve the shock resistance of the battery module 30. The first positioning portion 40 is provided on the bracket 60, preventing direct provision of the first positioning portion 40 on the box body 10 from affecting structural strength of the box body 10. In addition, the battery module 30 can be fixed in the box body 10 through the brackets 60, and the battery module 30 can be connected to the brackets 60 through connectors such as bolts, thus reducing the number of threaded holes or other connecting structures arranged on the box body 10 and ensuring the structural strength and sealing performance of the box body 10.

Still referring to FIG. 7, in some embodiments, the battery module 30 includes a plurality of battery cells 31 and two end plates 32 arranged at two ends of the plurality of battery cells 31 along the first direction X. The end plate 32 is provided with the second positioning portion 50, and the end plate 32 is configured to be supported by the bracket 60.

Since the battery module 30 includes a plurality of battery cells 31 connected in series, parallel, or series-parallel, two end plates 32 are arranged at two sections of the plurality of battery cells 31 along the first direction X to fix the plurality of battery cells 31 to form an integral structure. In some embodiments, the battery module 30 further includes two side plates (not shown in the figure) arranged at two ends of the plurality of battery cells 31 along a second direction Y, where the second direction Y is perpendicular to the first direction X. Along the second direction Y, two ends of the end plate 32 are connected to the two side plates respectively, and the two end plates 32 and the two side plates form a rectangular frame structure around the periphery of the plurality of battery cells 31, so as to fix the plurality of battery cells 31 to form an integral structure.

The end plate 32 is provided with a second mounting hole 321, and the second mounting hole 321 allows a connector such as a bolt to run through to connect the end plate 32 to the bracket 60. The second mounting hole 321 is provided in plurality.

Along a third direction Z, one end of the end plate 32 is provided with the second positioning portion 50, where the first direction X, the second direction Y, and the third direction Z are perpendicular to each other. In other embodiments, the second positioning portion 50 may alternatively be disposed on the housing 311 of the battery cell 31. The third direction Z is consistent with the direction in which the battery module 30 is put into the box body 10.

The battery module 30 includes a plurality of battery cells 31 and two end plates 32 arranged at two ends of the battery cells 31 along the first direction X, where the two end plates 32 can fix the plurality of battery cells 31 into an integral structure. The second positioning portion 50 is provided on the end plate 32, preventing the provision of the second positioning portion 50 from affecting the structure of the battery cells 31. The end plate 32 is configured to be supported by the bracket 60, which can avoid direct contact between the battery cells 31 and the brackets 60, and reduce the risk of collision damage to the battery cells 31.

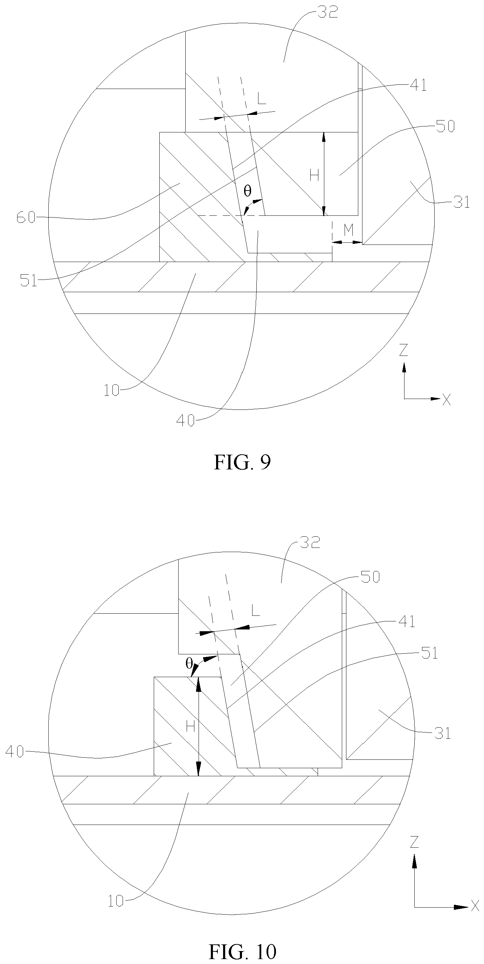

Referring to FIG. 8 and FIG. 9, FIG. 8 is a cross-sectional view of a battery 100 according to still some other embodiments of this application, and FIG. 9 is an enlarged view of position II in FIG. 8. In some embodiments, the battery cells 31 are located between the two brackets 60.

The end plates 32 arranged at two ends of the battery cells 31 in the first direction X are supported by the brackets 60 to have the battery cells 31 suspending between the two brackets 60, and a gap is present between the side of the battery cells 31 facing the bottom wall of the box body 10 and the bottom wall of the box body 10, so that the battery cell 31 is not in contact with the brackets 60 or the bottom wall of the box body 10 in the direction in which the battery module 30 is put into the box body 10.

The battery cells 31 being located between the two brackets 60 can be understood as a space for accommodating battery cells 31 being present between the two brackets 60, with the brackets 60 arranged bypassing the battery cells 31. This avoids direct contact between the battery cells 31 and the brackets 60 and reduces the risk of collision damage to the battery cells 31.

Referring to FIGs. 7, 8, and 9, in some embodiments, the first positioning portion 40 is a positioning groove and the second positioning portion 50 is a positioning protrusion. The positioning groove runs through a side of the bracket 60 facing the end plate 32 and a side of the bracket 60 facing the other bracket 60 of the two brackets 60.

That the positioning groove runs through a side of the bracket 60 facing the end plate 32 means: after the positioning protrusion is plug-fitted to the positioning groove, the side of the bracket 60 facing the end plate 32 is also the side of the bracket 60 facing the opening end 11 of the box body 10.

For ease of description, the two brackets 60 are defined as a first bracket and a second bracket respectively. The side of the bracket 60 facing the other bracket 60 of the two brackets 60 means along the first direction X, a side of the first bracket facing the second bracket or a side of the second bracket facing the first bracket.

In other embodiments, the positioning groove may alternatively run through only the side of the bracket 60 facing the end plate 32, which means the positioning groove has only one groove opening, and the groove opening faces the opening end 11 in the third direction Z.

The positioning groove runs through the side of the bracket 60 facing the end plate 32, so that a first groove opening is formed on the side of the positioning groove facing the end plate 32. The first groove opening faces the opening end 11 in the third direction Z, facilitating insertion of the positioning protrusion into the positioning groove. The positioning groove runs through the side of the bracket 60 facing the other bracket 60 of the two brackets 60, so that a second groove opening can be formed on the side of the bracket 60 facing the other bracket 60 of the two brackets 60. The second groove opening faces the other bracket 60 in the first direction X, reducing the risk of the battery cell 31 colliding with the bracket 60 in the process of putting the battery module 30 into the box body 10. In addition, two groove openings are formed on the positioning groove, which can reduce the weight of the brackets 60, thus reducing the weight of the battery 100.

Referring to FIG. 9, in some embodiments, a gap is present between an end of the battery cell 31 provided with the end plate 32 and the bracket 60. That is, along the first direction X, a gap is present between one end of the battery cell 31 and its closest bracket 60. In other embodiments, along the first direction X, one end of the battery cell 31 may be in contact with its closest bracket 60 in the first direction X. A gap M between an end of the battery cell 31 provided with the end plate 32 and the bracket 60, an included angle θ between the second guide inclined surface 51 and an end surface with the smallest cross-sectional area of the positioning protrusion, and a height H of the positioning protrusion (a distance between the end surface with the largest cross-sectional area and the end surface with the smallest cross-sectional area of the positioning protrusion) satisfy H * cotθ ≤ M.

A gap is present between the end of the battery cell 31 provided with the end plate 32 and the bracket 60, reducing the risk of the battery cell 31 colliding with the bracket 60.

Referring to FIGs. 9 and 10, in some embodiments, one of the first positioning portion 40 and the second positioning portion 50 is a positioning groove and the other is a positioning protrusion; where a gap is present between a bottom surface of the positioning groove and an end surface of the positioning protrusion facing the bottom surface of the positioning groove.

As shown in FIG. 9, the first positioning portion 40 is a positioning groove, and the second positioning portion 50 is a positioning protrusion. A surface of the end plate 32 facing the bottom wall of the box body 10 is supported against a surface of the bracket 60 facing the opening end 11 of the box body 10. A gap is present between an end surface of the positioning protrusion facing the bottom wall of the box body 10 (the end surface of the positioning protrusion facing away from the end plate 32) and a bottom surface of the positioning groove.

In other embodiments, as shown in FIG. 10, the first positioning portion 40 is a positioning protrusion, and the second positioning portion 50 is a positioning groove. A gap is present between an end surface of the positioning protrusion facing the opening end 11 of the box body 10 and a bottom surface of the positioning groove, and a surface of the end plate 32 facing the bottom wall of the box body 10 is supported against the bottom wall of the box body 10.

A gap is present between the bottom surface of the positioning groove and the end surface of the positioning protrusion facing the bottom surface of the positioning groove, so that when the battery 100 is subject to collision, the collision force is not transmitted to the positioning protrusion, preventing the positioning protrusion from being broken by the collision and affecting stability of the battery module 30 in the box body 10.

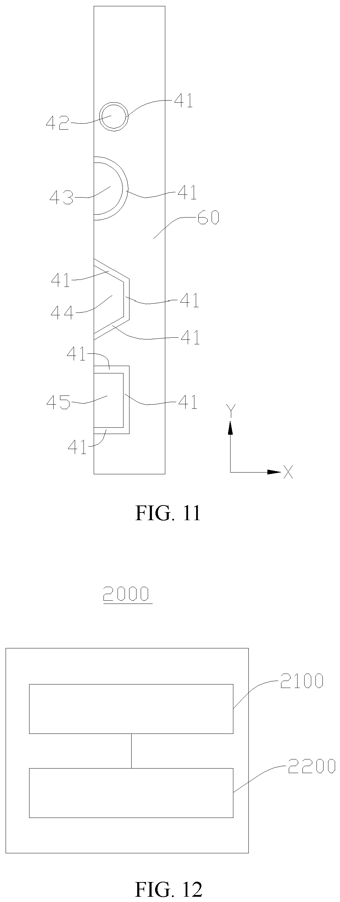

Referring to FIG. 11, in some embodiments, the bracket 60 is provided with a plurality of first positioning portions 40, and the plurality of first positioning portions 40 are spaced apart along the second direction Y; where the second direction Y is perpendicular to the first direction X.

The structures of the plurality of first positioning portions 40 may be the same or different. For example, the plurality of first positioning portions 40 are all conical positioning protrusions. For another example, the plurality of first positioning portions 40 are positioning recesses, and the plurality of positioning recesses have different structures. As shown in FIG. 11, four first positioning portions 40 are provided. For easy description of each first positioning portion 40, the four first positioning portions 40 are defined as a first positioning portion a42, a first positioning portion b43, a first positioning portion c44, and a first positioning portion d45.

The first positioning portion a42 is a positioning groove with a groove side wall closed in a circumferential direction, and the groove side wall may be a cylindrical surface or a conical surface. FIG. 11 shows the first positioning portion a42 with the groove side wall being a conical surface. The first positioning portion b43, the first positioning portion c44, and the first positioning portion d45 are positioning grooves with the groove side walls not closed in the circumferential direction, and the first positioning portion b43, the first positioning portion c44, and the first positioning portion d45 each have two groove openings. The first positioning portion b43 is a positioning groove, and its groove side wall is part of a cylindrical surface or a conical surface. FIG. 11 shows the first positioning portion b43 with the groove side wall being part of a conical surface. The groove side walls of the first positioning portion c44 and the first positioning portion d45 include three first guide inclined surfaces 41 connected sequentially along the circumferential direction, and the first guide inclined surfaces 41 are inclined planes. Two adjacent first guide inclined surfaces 41 of the first positioning portion c44 are arranged at an obtuse angle, and two adjacent first guide inclined surfaces 41 of the first positioning portion d45 are arranged at a right angle.

In other embodiments, the bracket 60 may alternatively be provided with only one first positioning portion 40. In an embodiment where the bracket 60 is provided with a plurality of first positioning portions 40 along the second direction Y, a plurality of second positioning portions 50 may be correspondingly provided on the end plate 32 of the battery module 30.

A plurality of first positioning portions 40 are spaced apart on the bracket 60 along the second direction Y, so that a plurality of second positioning portions 50 can be correspondingly arranged on the battery module 30 along the second direction Y, allowing the battery module 30 to be plug-fitted to a plurality of positions in the box body 10, thus ensuring the positioning accuracy and positioning stability of the battery module 30 in the box body 10.

The embodiment of this application provides a battery 100 including a box body 10, a battery module 30, a first positioning portion 40, a second positioning portion 50, and two brackets 60. The two brackets 60 are spaced apart in the box body 10 along a first direction X, and the brackets 60 are mounted on a bottom wall of the box body 10. The two brackets 60 are both provided with a plurality of first positioning portions 40, the plurality of first positioning portions 40 on each bracket 60 being spaced apart along a second direction Y The first positioning portion 40 is a positioning groove. The positioning groove runs through a side of the bracket 60 facing the end plate 32 and a side of the bracket 60 facing the other bracket 60 of the two brackets 60.

The battery module 30 includes two end plates 32 and a plurality of battery cells 31, where the two end plates 32 are respectively arranged at two ends of the plurality of battery cells 31 along the first direction X, the end plates 32 are fixedly supported on the brackets 60, and the plurality of battery cells 31 are located between the two brackets 60 and have a gap with a bottom wall of the box body 10. The two end plates 32 are both provided with a plurality of second positioning portions 50, and the second positioning portions 50 are positioning protrusions.

The first positioning portion 40 has a first guide inclined surface 41, and the second positioning portion 50 has a second guide inclined surface 51. The second guide inclined surface 51 matches the first guide inclined surface 41 so that the first guide inclined surface 41 guides the positioning protrusion into the positioning groove along a depth direction of the positioning groove. The second positioning portions 50 are arranged in one-to-one correspondence with the first positioning portions 40. The second positioning portions 50 are inserted into the corresponding first positioning portions 40, and a gap is present between the first guide inclined surface 41 of the first positioning portion 40 and the second guide inclined surface 51 of the second positioning portion 50. A gap is present between a bottom surface of the positioning groove and an end surface of the positioning protrusion facing the bottom surface of the positioning groove.

An embodiment of this application further provides an electric device including the battery 100 provided in any one of the foregoing embodiments.

Referring to FIG. 12, FIG. 12 is a schematic structural diagram of a manufacturing device 2000 of battery according to an embodiment of this application. The manufacturing device 2000 of battery includes a providing apparatus 2100 and an assembling apparatus 2200. The providing apparatus 2100 is configured to provide a battery module 30 and a box body 10, where the box body 10 is provided with a first positioning portion 40; and the battery module 30 is at least partially accommodated in the box body 10, and the battery module 30 is provided with a second positioning portion 50. The assembling apparatus 2200 is configured to plug-fit the second positioning portion 50 to the first positioning portion 40 to position the battery module 30 in the box body 10.

The first positioning portion 40 is disposed in the box body 10 provided by the providing apparatus 2100, and the second positioning portion 50 is disposed on the battery module 30. The assembling apparatus 2200 plug-fits the second positioning portion 50 to the first positioning portion 40 to position the battery module 30 at a correct position in the box body 10, improving positioning accuracy of putting the battery module 30 into a box, and achieving the purpose of accurately putting the battery module 30 into the box body 10.

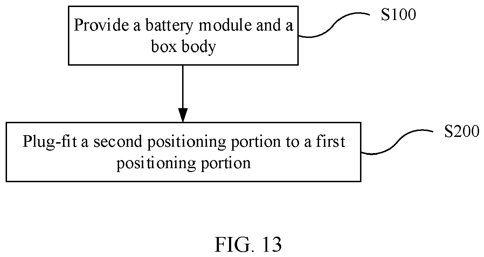

Referring to FIG. 13, FIG. 13 is a flowchart of a manufacturing method of battery 100 according to an embodiment of this application. An embodiment of this application further provides a manufacturing method of battery 100. The manufacturing method of battery 100 includes:
step S100: providing a battery module 30 and a box body 10; where
the box body 10 is provided with a first positioning portion 40, and the battery module 30 is provided with a second positioning portion 50; and
step S200: plug-fitting the second positioning portion 50 to the first positioning portion 40 to position the battery module 30 in the box body 10.

For a relevant structure of the battery 100 manufactured using the manufacturing method of battery 100 described above, reference may be made to the battery 100 provided in the foregoing embodiments.

The first positioning portion 40 is disposed in the box body 10, and the second positioning portion 50 is disposed on the battery module 30. The second positioning portion 50 is plug-fitted to the first positioning portion 40 so as to position the battery module 30 at a correct position in the box body 10, improving positioning accuracy of putting the battery module 30 into the box, and achieving the purpose of accurately putting the battery module 30 into the box body 10.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, comprising:
a box body provided with a first positioning portion;
a battery module at least partially accommodated in the box body, wherein the battery module is provided with a second positioning portion, and the second positioning portion is configured to be plug-fitted to the first positioning portion to position the battery module in the box body.

2. The battery according to claim 1, wherein one of the first positioning portion and the second positioning portion is a positioning groove and the other is a positioning protrusion; and
a groove side wall of the positioning groove comprises a first guide inclined surface, and the first guide inclined surface is configured to guide the positioning protrusion into the positioning groove along a depth direction of the positioning groove, so that a positioning fit is formed between the positioning protrusion and the positioning groove.

3. The battery according to claim 2, wherein a peripheral wall of the positioning protrusion comprises a second guide inclined surface, wherein the second guide inclined surface is configured to match the first guide inclined surface.

4. The battery according to claim 2 or 3, wherein the groove side wall comprises a plurality of first guide inclined surfaces located in different directions and connected sequentially in a circumferential direction.

5. The battery according to claim 4, wherein the first guide inclined surface is a plane.

6. The battery according to claim 2 or 3, wherein the first guide inclined surface is part or all of a conical surface.

7. The battery according to any one of claims 1 to 6, wherein the battery further comprises two brackets spaced apart in a first direction, wherein the two brackets jointly support the battery module; and
the first positioning portion is provided on the bracket.

8. The battery according to claim 7, wherein the battery module comprises a plurality of battery cells and two end plates arranged at two ends of the plurality of battery cells along the first direction, wherein the end plate is provided with the second positioning portion, and the end plate is configured to be supported by the bracket.

9. The battery according to claim 8, wherein the battery cell is located between the two brackets.

10. The battery according to claim 9, wherein the first positioning portion is a positioning groove, and the second positioning portion is a positioning protrusion; and
the positioning groove runs through a side of the bracket facing the end plate and a side of the bracket facing the other bracket of the two brackets.

11. The battery according to claim 9 or 10, wherein a gap is present between an end of the battery cell provided with the end plate and the bracket.

12. The battery according to any one of claims 8 to 11, wherein one of the first positioning portion and the second positioning portion is a positioning groove and the other is a positioning protrusion; and
a gap is present between a bottom surface of the positioning groove and an end surface of the positioning protrusion facing the bottom surface of the positioning groove.

13. The battery according to any one of claims 9 to 12, wherein the bracket is provided with a plurality of first positioning portions, and the plurality of first positioning portions are spaced apart along a second direction;
wherein the second direction is perpendicular to the second direction.

14. An electric device, comprising the battery according to any one of claims 1 to 13.

15. A manufacturing device of battery, comprising:
a providing apparatus, configured to provide a battery module and a box body, wherein
the box body is provided with a first positioning portion; and
the battery module is at least partially accommodated in the box body, and the battery module is provided with a second positioning portion; and
an assembling apparatus, configured to plug-fit the second positioning portion to the first positioning portion to position the battery module in the box body.

16. A manufacturing method of battery, comprising:
providing a battery module and a box body, wherein
the box body is provided with a first positioning portion; and
the battery module is at least partially accommodated in the box body, and the battery module is provided with a second positioning portion; and
plug-fitting the second positioning portion to the first positioning portion to position the battery module in the box body.
